# EUROPEAN PATENT APPLICATION

(11) **EP 3 100 778 A1**
(43) Date of publication of application: **07.12.2016**
(21) Application number: 16171360.7
(22) Date of filing: 25.05.2016
(51) Int. Cl.: B01D 35/18, B01D 36/00, B01D 29/15, B01D 29/60

(54) **A CONNECTOR DEVICE FOR A FILTER AND A RELATIVE FILTER**

(30) Priority: 04.06.2015 IT UB20151091
(71) Applicant: Ufi Filters s.p.a., 46047 Porto Mantovano (Mantova) (IT)
(72) Inventor: GIRONDI, Giorgio, 46100 MANTOVA (IT)
(74) Representative: Corradini, Corrado

(57) **Abstract**

A connector device (110) for a filter (105), wherein the connector device comprises: a first internal chamber (195) able to place an inlet (200) for the fluid to be filtered in communication with an outlet (205) for the fluid to be filtered, a second internal chamber (210) hydraulically separated from the first (195) and able to place an inlet (215) for the filtered fluid in communication with an outlet (220) for the filtered fluid, and a fitting element (225) having a longitudinal axis (YB) and able to couple with a fitting element (130) of a casing (115) of the filter (105) for realising therewith a rotational joint defining an axis of reciprocal rotation coinciding with the longitudinal axis (YB), wherein the outlet (205) of the fluid to be filtered and the inlet (215) of the filtered fluid are both defined internally of the fitting element (225).

## Description

### TECHNICAL FIELD

The present invention relates to the field of filtration, and, more specifically, to the field of filtration of motor fluids, such as for example combustible fuel or lubricating oil, which are destined to be used for the functioning of an internal combustion engine, typically an internal combustion engine of a motor vehicle or any other motor-driven vehicle. In more detail, the present invention relates to a connector device designed for supporting and connecting a filter to the hydraulic plant in which the fluid to be filtered circulates. The invention lastly relates to a filter destined to be coupled to the connector device and the filter comprising both the connector device and the filter coupled thereto.

### PRIOR ART

As is known, a filter generally comprises an external casing provided with an inlet of the fluid to be filtered and an outlet of the filtered fluid, and a filter wall able to subdivide the internal volume of the casing into at least two separate chambers, of which a first chamber communicating with the inlet and a second chamber communicating with the outlet, so that all the fluid coming from the inlet is forced to cross the filter wall before reaching the outlet.

In some embodiments, the external casing of the filter can be defined by a beaker-shaped body which contains a filter wall having a tubular shape and by a cover which closes the beaker-shaped body and which bears the inlet and the outlet for the fluid. The cover can be stably fixed to the inside of the engine compartment, so as to support the filter and connect it to the hydraulic plant in which the fluid to be filtered circulates, while the beaker-shaped body can be removably fixed to the cover, for example by means of a threaded collar or a snap-fitting system. In this way, when the filter wall contained in the filter becomes excessively clogged, the beaker-shaped body can be separated from the cover, enabling the removal and replacement of the filter wall.

A filter exhibiting this architecture is described in US patent US4732671, which in particular includes that internally of the cover there are also a hydrophobic separator wall able to separate the droplets of water that might be present in the filtered fluid, enabling them to fall by gravity into a collecting tank therefor, and a level sensor located in the colleting tank for signalling when the level of water accumulated exceeds a predetermined threshold value.

A technical problem connected with this type of filter however consists in the fact that in order to enable periodic replacement of the filter wall, the filters must be installed internally of the engine compartment in an easily accessible position and with a space that is sufficient for an operative to demount and remount the beaker-shaped body; this complicates in no small way the layout of the engine.

To resolve this problem, solutions have been proposed in the past which include the filter casing being mechanically and hydraulically connected to a connector device which enables the filter to rotate from a working position, in which it can be hidden in a difficult-to-reach location but useful for reducing dimensions, and a service position in which the filter can be more easily and effectively reached by the operator for replacing the filter wall.

Some examples of these solutions are described in prior patents EP1321637, EP0269054 and FR3000764.

A drawback of all the solutions known up to now consists however in the fact that the mechanical/hydraulic connection system between the connector device and the filter casing is generally rather complicated, making the filter group overall expensive. In the prior-art solutions, the mechanical/hydraulic connection system between the connector device and the filter casing is further substantially unbreakable, so it is always necessary for the filter casing to be openable and the filter wall to be replaced while working in small spaces in the engine compartment. Lastly, the solutions of the prior art do not enable separation and collection of the water droplets which can be present in the fluid to be filtered.

An aim of the present invention is therefore to obviate or at least significantly reduce the above-mentioned drawbacks of the prior art, while remaining in the field of a simple and rational solution having a cost that is as economical as possible.

These and other aims are attained by the characteristics of the invention as reported in the independent claims. The dependent claims delineate preferred and/or particularly advantageous aspects of the invention.

In particular, an embodiment of the present invention relates to a connector device for a filter, wherein the connector device comprises at least:
- a first internal chamber able to place an inlet for the fluid to be filtered in communication with an outlet for the fluid to be filtered,
- a second internal chamber hydraulically separated from the first internal chamber and able to place an inlet for the filtered fluid in communication with an outlet for the filtered fluid, and
- a fitting element having a longitudinal axis and able to couple with a fitting element of a casing of the filter for realising therewith a rotational joint defining an axis of reciprocal rotation coinciding with the longitudinal axis, wherein the outlet of the fluid to be filtered and the inlet of the filtered fluid are both defined internally of the fitting element.

With this solution, the connector device enables the filter to oscillate about the fitting element, for example by moving between a working position in which it is hidden, and a service position in which it is easily accessible, using a mechanical/hydraulic connecting system that is rather simple and economical.

The mechanical/hydraulic connecting system is further easily resolvable, for example with a simple de-inserting movement along the longitudinal axis of the fitting element, enabling a total removal of the filter (comprising the casing thereof) which can then be distanced from the engine compartment, facilitating the replacement of the filter wall.

In an aspect of the invention, the second chamber of the connector device can be internally subdivided into two volumes separated by a hydrophobic wall able to be crossed by the fluid which flows from the inlet of the filtered fluid to the outlet of the filtered fluid.

Thanks to the presence of the hydrophobic wall, the connector device becomes a functional device which enables an effective separation of the water from the filtered fluid (for example diesel fuel) without requiring the use of solutions which complicate the filter.

In this way, the filter can be given the sole function of filtration and possibly coalescence of the droplets of water, thus becoming a very simple and economical component which can be replaced in its entirety (including the external casing) as if it were a single exchange part, avoiding the need to remove the filter wall located internally thereof.

It is however possible, in other embodiments, for the hydrophobic wall to be inserted internally of the external casing of the filter, arranged in such a way as to be crossed by the filtered fluid before the fluid reaches the outlet afforded in the fitting element, and therefore before returning into the second chamber of the connector device.

In an aspect of the invention, the fitting element of the connector device can be defined by a cylindrical sleeve which comprises a central conduit and an annular gap separated from the central conduit and developing coaxially about the central conduit.

This aspect of the invention represents a particularly simple and practical solution for mechanically/hydraulically fitting the connector device to the filter casing.

In particular, the annular gap of the cylindrical collar can define the outlet of the fluid to be filtered while the central conduit can define the inlet of the filtered fluid.

In this way the connector device is particularly suitable for being coupled to a filter configured so that the fluid to be filtered crosses a tubular filter wall radially from externally towards internally.

It is however possible that in other embodiments, the annular gap of the cylindrical sleeve can define the inlet of the filtered fluid and the central conduit can define the outlet of the fluid to be filtered, making the connector device particularly suitable for being coupled to a filter configured so that the fluid to be filtered crosses a tubular filter wall radially from internally towards externally.

In a further aspect of the invention, the first and the second chamber of the connector device are delimited by an internally hollow body and by a cover able to close the hollow body.

This aspect provides a simple and rational solution for realising the connector device.

In this context, the inlet for the fluid to be filtered can be provided in the cover, while the outlet for the filtered fluid and the fitting element (with the outlet for the fluid to be filtered and the inlet for the filtered fluid) can be provided in the hollow body.

This solution enables simplifying and rationalising the construction of the connector device.

In a further aspect of this embodiment of the invention, the cover can bear an electrical device internally of the first and/or the second chamber of the connector device.

In this way, other accessory functions of treatment of the fluid to be filtered and/or the filtered fluid can be delegated to the connector device, without any need to complicate the construction of the filter.

For example, the electric device can comprise or be constituted by a level sensor located internally of the second chamber.

In this way the level of the water can be detected which, separating from the filtered fluid, accumulates in the second chamber of the connector device by effect of the hydrophobic wall.

Alternatively or additionally, the electronic device can comprise or be constituted by a heater located internally of the first chamber.

In this way the fluid to be filtered can be heated with the aim of preventing, especially at low temperatures, it from being able to become more dense to the point of rapidly clogging the filter.

In any case, in an aspect of the invention, the cover can also be provided with an electrical connector located externally of the first and second chamber and connected to the electrical device.

In this way, the electrical device can easily be connected with the electronic control and management device able to supply it electrically and, for example, in the case of the level sensor, able to receive the measuring signal generated by it and use the signal as an input for the various control logics.

In some embodiments, a cooling device could be associated to the cover, able to cool the fluid to be filtered internally of the first chamber and/or the fluid already filtered internally of the second chamber of the connector device.

This cooling system might be made in the form of a heat exchanger in which a cooling fluid, for example the engine coolant fluid, is in a heat exchange relation with the fluid to be filtered in the first chamber or with the fluid already filtered in the second chamber of the connector device. In practice, the connector device might internally comprise an auxiliary channelling located in communication with an inlet and an outlet for the cooling fluid, which is in heat exchange relation with the first chamber of the fluid to be filtered or with the second chamber of the filtered fluid.

This embodiment might be useful in a case of filtration of the lubricating oil which, during the functioning of the engine, must not reach excessively high temperatures.

In a further aspect of the invention, the connector device can further comprise a support base able to be fixed to a chassis of a vehicle.

For example, the support base can be fixed below the chassis of the vehicle, so that the filter coupled to the connector device is not located internally of the engine compartment but below the vehicle, with the aim of reducing the dimensions of the engine compartment and optimise the spaces available.

The support base can further be configured so that the filter is normally orientated horizontally, without excluding that in other embodiments the support base can be configured so that the filter is normally orientated vertically.

In an aspect of this embodiment, the support base can comprise a cylindrical cap having an axis perpendicular to the longitudinal axis of the fitting element and able to at least partly house the casing of the filter.

In this way the size of the filter is mostly comprised in the dimension of the connector device, reducing the space required for installing the group on the vehicle.

A further embodiment of the invention further discloses a filter which comprises:
an external chamber able to place an inlet for the fluid to be filtered in communication with an outlet for the filtered fluid,
a filter wall able to subdivide the internal volume of the casing in a first chamber communicating with the inlet and a second chamber communicating with the outlet,
a fitting element provided in the casing of the filter and able to couple with the fitting element of a connector device as described in the preceding,
where the inlet of the fluid to be filtered and the outlet of the fluid filtered by the filter are both defined internally of the fitting element.

This embodiment of the invention makes practically available a filter specifically suitable for being coupled with the connector device delineated in the foregoing, so as to be able to attain the aims and effects of the invention.

In an aspect of this embodiment, the fitting element of the filter can comprise a cavity having an axialsymmetric shape internally of which the inlet of the fluid to be filtered and the outlet of the filtered fluid open.

In this way it is possible to couple the filter to the connector device in a case in which the connecting element thereof is defined by a corresponding sleeve having an axialsymmetric shape.

It is however possible, in other embodiments, for the two fitting elements to be inverted, i.e. the fitting element of the filter could be a sleeve having an axialsymmetric shape and the connecting element of the connector device could comprise a corresponding cavity having an axialsymmetric shape.

The invention lastly relates to a filter group comprising both the connector device and the filter which have been described in the foregoing. The filter group can therefore be provided with a connector device which comprises:
- a first internal chamber able to place an inlet for the fluid to be filtered in communication with an outlet for the fluid to be filtered,
- a second internal chamber hydraulically separated from the first internal chamber and able to place an inlet for the filtered fluid in communication with an outlet for the fluid to be filtered, and
- a fitting element having a longitudinal axis,
wherein the second chamber of the connector device can be internally subdivided into two volumes separated by a hydrophobic wall able to be crossed by the fluid which flows from the inlet of the filtered fluid to the outlet of the filtered fluid, and wherein the outlet of the fluid to be filtered and the inlet of the filtered fluid are both defined internally of the fitting element,
and a filter which comprises:
an external chamber able to place an inlet for the fluid to be filtered in communication with an outlet for the filtered fluid,
a filter wall able to subdivide the internal volume of the casing into a first chamber communicating with the inlet and a second chamber communicating with the outlet, and

- a fitting element provided in the casing of the filter,
where the inlet of the fluid to be filtered and the outlet of the filtered fluid of
the filter are both defined internally of the fitting element,
the fitting element of the connector device and the fitting element of the filter being reciprocally coupled, realising a rotational joint defining an axis of reciprocal rotation coinciding with the longitudinal axis of the fitting element of the connector device, and placing the outlet for the fluid to be filtered of the connector device in hydraulic communication with the inlet of the fluid to be filtered of the filter and the inlet of the filtered fluid of the connector device in hydraulic communication with the outlet of the filtered fluid of the filter.

This embodiment of the invention substantially attains the same aims and substantially obtains the same effects already described in the foregoing with reference to the other embodiments.

In an aspect of this last embodiment of the invention, the filter group can comprise constraining means able to prevent axial de-inserting of the fitting element of the connector element with respect to the fitting element of the filter, when the filter is in a predetermined work position with respect to the connector device.

In this way the separation of the filter from the connector device is enabled only when the filter is not in the working position, but is for example in a service position in which the filter is easily reachable in order to be removed and possibly replaced.

In an aspect common to all the embodiments delineated in the foregoing, the external casing of the filter can have an elongate shape according to a predetermined longitudinal axis, for example a cylindrical shape or almost-cylindrical shape, and can be able to contain a filter wall having a tubular shape substantially coaxial internally thereof.

In this case, the longitudinal axis of the fitting element of the connector device (and consequently the longitudinal axis of the fitting element of the filter coupled thereto) is preferably inclined with respect to the longitudinal axis of the filter casing (i.e. can form, with the latter, an angle that is not 0°), for example the two longitudinal axes can be reciprocally perpendicular.

### BRIEF DESCRIPTION OF THE FIGURES

Further characteristics and advantages of the invention will emerge from a reading of the following description, provided by way of non-limiting example with the aid of the figures illustrated in the appended tables of drawings.

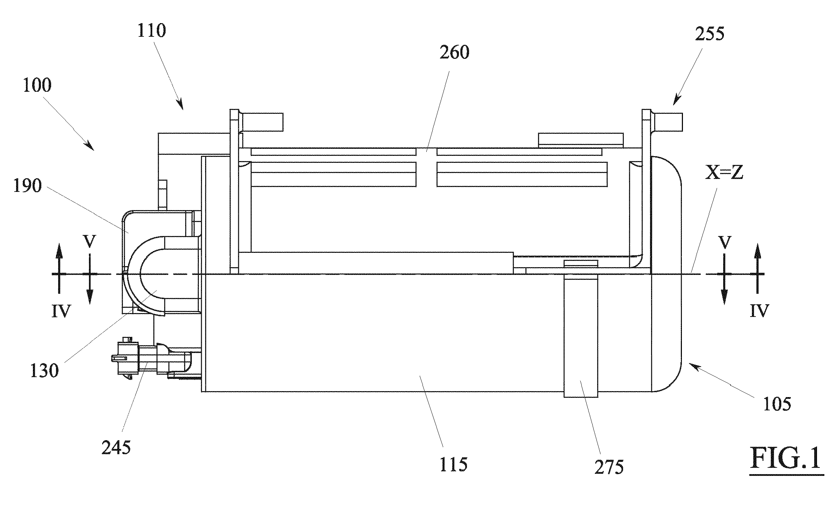

Figure 1 is a lateral view of a filter group according to an embodiment of the present invention, shown with the filter in the working position.

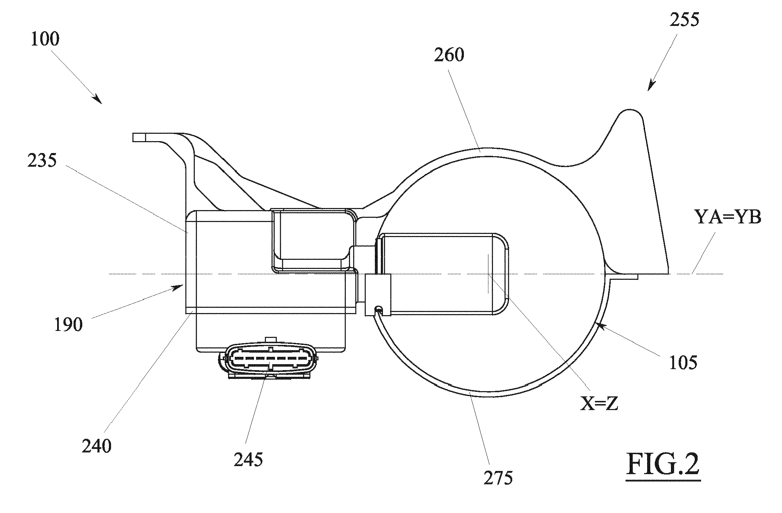

Figure 2 is a front view from the left of figure 1.
Figure 3 is a front view from below of figure 1.
Figure 4 is section IV-IV of figure 1.

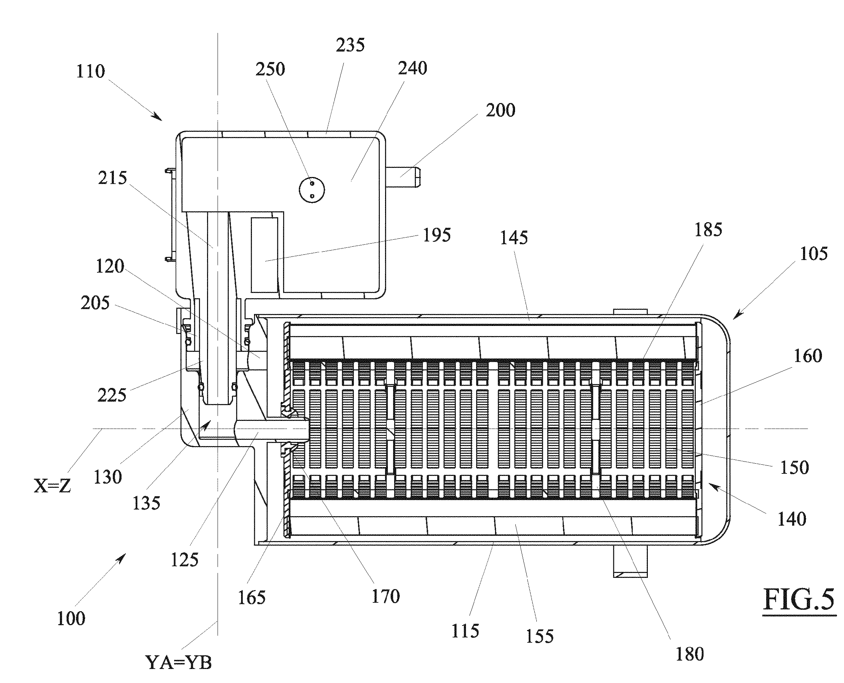

Figure 5 is section V-V of figure 1.
Figure 6 is the view of figure 1 which shows the filter in the service position.
Figure 7 is a front view from the left of figure 6.
Figure 8 is a front view from below of figure 6.
Figure 9 is section IX-IX of figure 6.
Figure 10 is section X-X of figure 3.
Figure 11 is section XI-XI of figure 8.

### DETAILED DESCRIPTION

The above-mentioned figures illustrate a filter group 100 for filtration of motor fluids, such as for example combustible fuel or lubricating oil, which are destined to be used for the functioning of an internal combustion engine, in particular an internal combustion engine of a motor vehicle or any other motor-driven vehicle. In the specific example, the filter group 100 is predisposed for filtration of combustible diesel fuel destined to supply a Diesel engine, without this excluding other possible applications.

The filter group 100 comprises two separate components which are however specifically adapted for coupling to one another, of which a filter 105 and a connector device 110 able to support the filter 105 and to connect it to the hydraulic circuit in which the fluid to be filtered flows, in the example in which the diesel fuel directed to the Diesel engine flows.

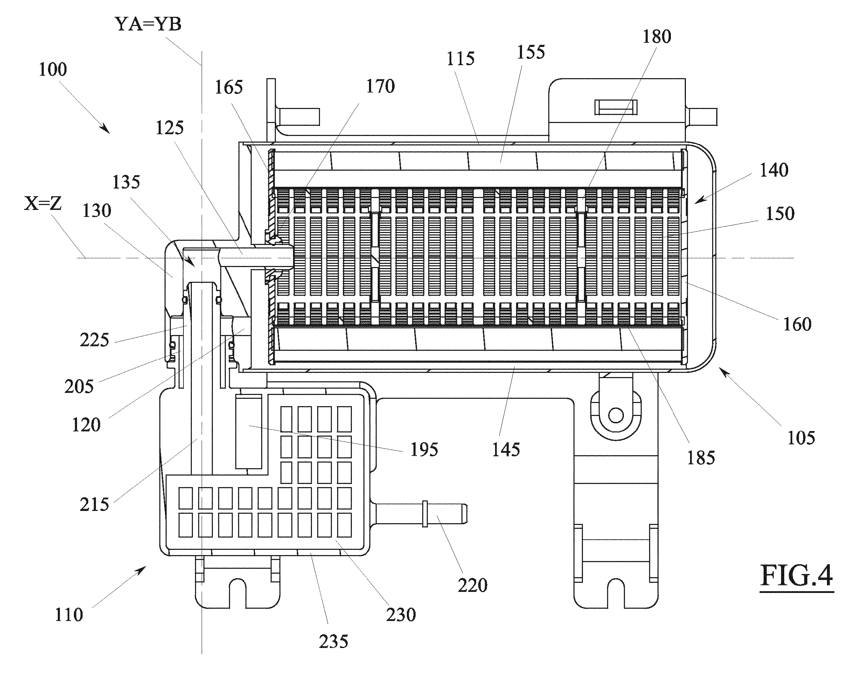

As illustrated in figure 4, the filter 105 comprises an external chamber (115) having a substantially cylindrical shape and a longitudinal axis X, which is provided with an inlet conduit 120 for the fluid to be filtered and an outlet conduit 125 for the filtered fluid,

In the illustrated example, the outlet conduit 125 develops centrally and coaxially with respect to the longitudinal axis X and projects by a portion internally of the external casing 115, while the inlet conduit 120 extends parallel to the outlet conduit 125 in an offset position with respect to the longitudinal axis X.

On the external side of the casing 115, both the inlet conduit 120 and the outlet conduit 125 are at least partially defined by a single fitting element 130.

In practice, the fitting element 130 is conformed as a portion of the external casing 115 internally of which a cavity 135 is afforded, communicating with both the inlet conduit 120 and with the outlet conduit 125. The internal cavity 135 has a substantially axialsymmetric shape with respect to a longitudinal axis YA orientated perpendicularly to the longitudinal axis X of the external casing 115 and has an open axial end and a closed opposite axial end. At the open end, the internal cavity 135 is defined by a first substantially cylindrical portion, from which the inlet conduit 120 branches, while at the closed end it is defined by a second substantially cylindrical portion having a smaller diameter with respect to the first portion, in which the outlet conduit 125 opens.

A filter cartridge 140 is housed in the external casing 115, which can subdivide the internal volume of the casing into two separate chambers, a first chamber 145 communicating with the inlet conduit 120 and a second chamber 150 communicating with the outlet conduit 125.

The filter cartridge 140 can comprise a filter wall 155 having a substantially tubular shape, the opposite axial ends of which are closed by two support plates, of which a first plate 160 able to completely close the internal cavity of the filter wall 155 and a second plate 165 provided with a central opening 170 able to place the internal cavity of the filter wall 155 in communication with the outside.

The central opening 170 of the second plate 165 is inserted, with interposing of an annular seal, on the projecting portion of the outlet conduit 125, so that the second chamber 150 of the filter is defined by the internal cavity of the filter wall 155, while the first chamber 145 of the filter is defined by the gap comprised between the internal surface of the casing 115 and the external surface of the filter wall 155.

In this way, the fluid to be filtered can cross the filter wall 155 radially from outside towards inside.

The filter wall 155 can be a surface wall, for example a cellulose-based wall with a star geometry, or can be a depth wall, for example a non-woven textile wall made of polymer fibres which can be obtained for example by a melt-blown process. The support plates 160 and 165 can be made of a plastic material and can be fixed to the filter wall 155 by gluing, welding or any other known system.

The filter cartridge 140 can further comprise a support core 180, substantially conformed as a cylindrical cage, which is comprised between the two support plates 160 and 165 and is coaxially inserted internally of the filter wall 155, so as to counter-balance the thrusts generated by the fluid crossing it.

The filter cartridge 140 can also be provided with a coalescent wall 185 located downstream of the filter wall 155 with respect to the crossing direction of the fluid to be filtered, which by coalescence can aggregate the water particles which can be present in the fluid, so as to obtain drops of larger dimensions.

The coalescent wall 185 can be for example a permeable membrane of a material selected from among viscose, polyester and glass fibre. In the illustrated example, the coalescent wall 185 is enveloped to form a tubular body which is externally surrounded by the filter wall 155, remaining axially comprised between the support plates 160 and 165.

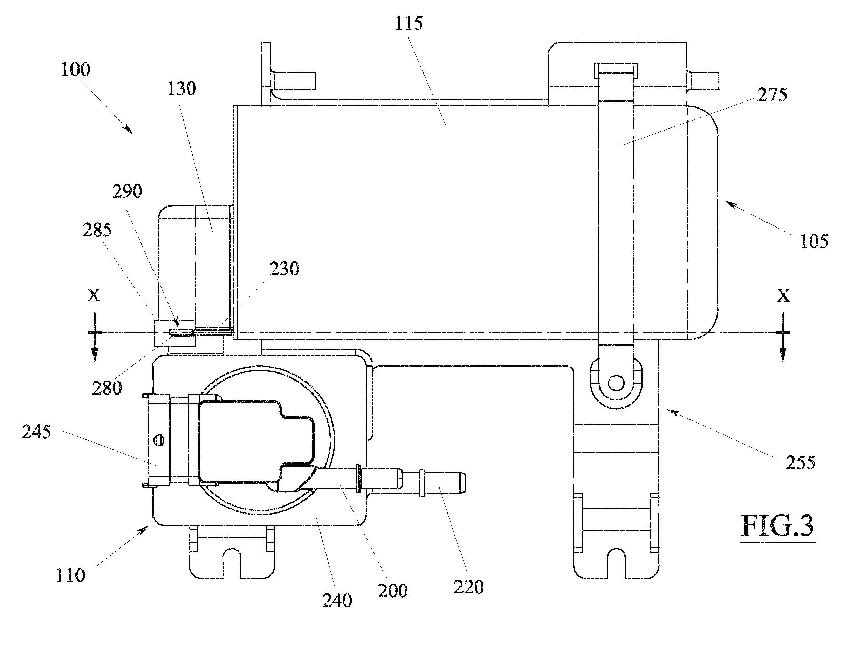

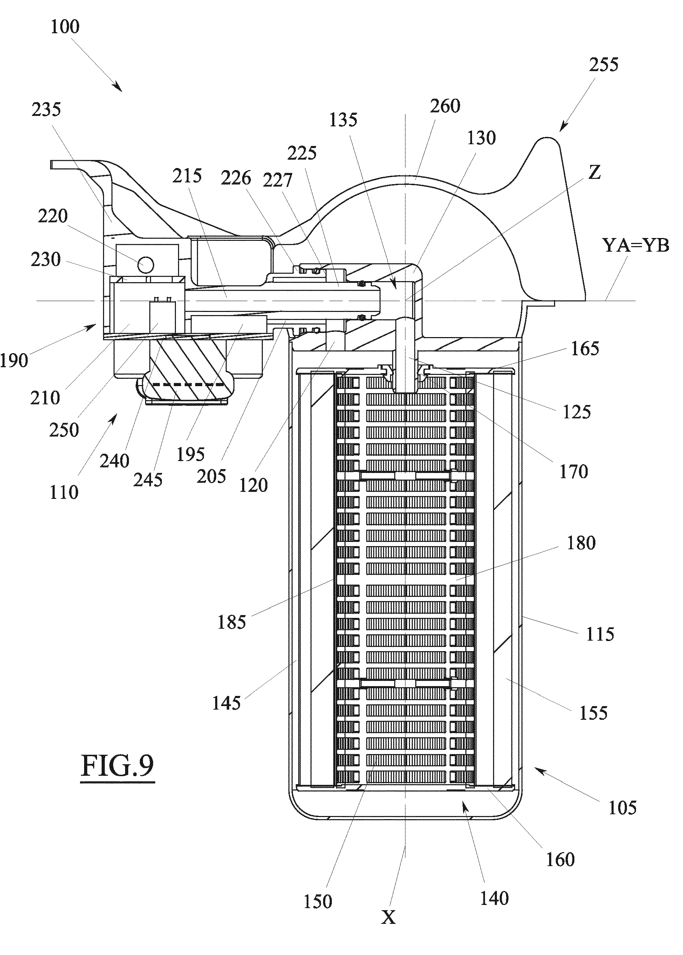

As illustrated in figure 9, the connector device 110 generally comprises an external casing 190, internally of which two hydraulically separated chambers are defined, of which a first chamber 195 able to place an inlet conduit 200 for the fluid to be filtered (visible for example in figure 3) in communication with an outlet conduit 205 for the fluid to be filtered, and a second chamber 210 able to place an inlet conduit 215 of the filtered fluid in communication with an outlet conduit 220 of the same filtered fluid.

Both the outlet conduit 205 for the fluid to be filtered and the inlet conduit 215 of the filtered fluid are at least partially defined by a single fitting element 225.

The fitting element 225 is conformed as a sleeve projecting from the external casing 190, which has a substantially axialsymmetric shape with respect to a longitudinal axis YB which has a substantially complementary shape to that of the internal cavity 135 of the fitting element 130. In particular, the fitting element 225 is axially delimited by a free end and an annular abutment 226.

At the annular abutment 226, the fitting element 225 has a first substantially cylindrical portion having an end edge 227 from which a second substantially cylindrical portion coaxially projects, having a smaller diameter than the first, which terminates at the free end.

The inlet conduit 215 for the filtered fluid develops coaxially to the centre of the fitting element 225 for the whole extension thereof, starting from the free end up to reaching the second chamber 210, while the outlet conduit 205 for the fluid to be filtered is defined by an annular gap, which is made only in the first portion of the fitting element 225, develops coaxially about the inlet conduit 215, opens freely to the outside at the end body 227, and is in communication with the first chamber 195.

The second chamber 210 of the connector device 110 can be internally subdivided into two volumes separated by a hydrophobic wall 230 able to be crossed by the filtered fluid which flows from the inlet conduit 215 to the outlet conduit 220 of the filtered fluid. The hydrophobic wall 230 can be realised by a net made of PET or PBT coated with fluorine or silicone. In the illustrated example, the hydrophobic wall 230 has a flat development and is installed in the second chamber 210 so as to be be parallel to the longitudinal axis YB of the fitting element 225. In an alternative embodiment, the hydrophobic wall 230 might however have a tubular shape which, possibly supported by a support structure, is in any case arranged so as to subdivide the internal volume of the second chamber 210 into the two separate volumes mentioned in the foregoing, and therefore be at least partly crossed by the fluid directed to the outlet conduit 220. For example, the tubular hydrophobic wall might be arranged so as to surround the outlet conduit 220 or the inlet conduit 215.

In other embodiments, the hydrophobic wall might be associated to the filter 105 instead of the to connector device 110. In practice, the hydrophobic wall might be inserted internally of the external casing 115 of the filter 110, arranged in such a way as to be crossed by the filtered fluid before the fluid reaches the outlet 125 afforded in the fitting element 130. For example, the hydrophobic wall might be a component of the filter cartridge 140 which is positioned downstream of the filter wall 155 and the coalescent wall 185 (if present) with respect to the crossing direction of the fluid. In the illustrated example, the hydrophobic wall might therefore be conformed as a tubular membrane which is inserted coaxially internally of the filter wall 155 and the coalescent wall 185 (if present).

From the constructional point of view, the external casing 190 of the connector device 110 can comprise two separate bodies, of which a hollow body 235 and a cover 240. The hollow body 235 can be conformed substantially as a tray, in which the first chamber 195 and the second chamber 210 are delimited on five sides and remain open on a sixth side.

The cover 240 can be fixed to the hollow body 235 at the sixth side, so as to close the first chamber 195 and the second chamber 210. The hollow body 235 and the cover 240 can be made of a plastic material and be fixed to one another separably or inseparably using any system suitable for the purpose.

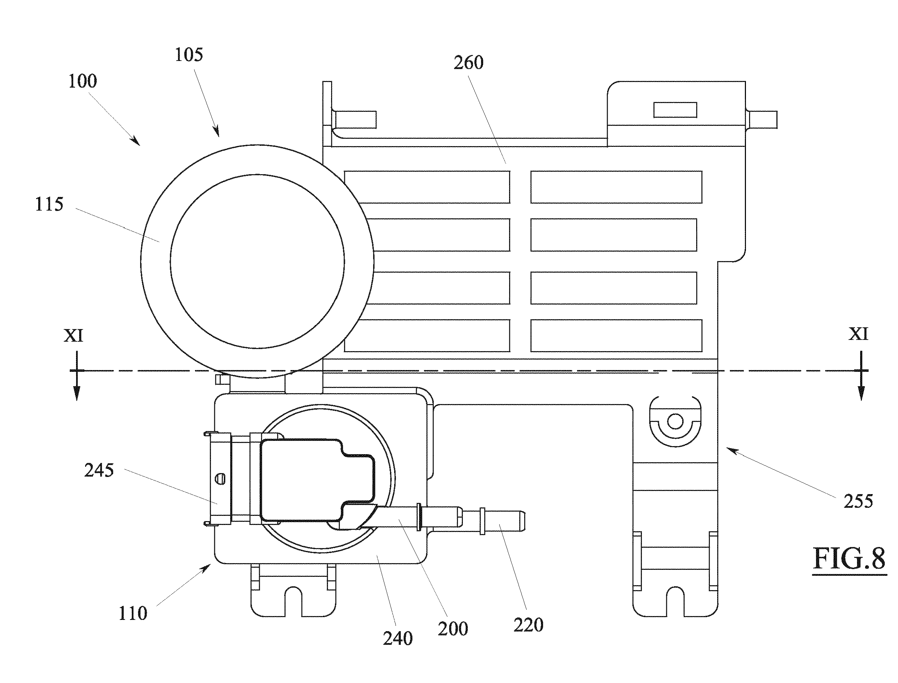

In the illustrated example the inlet conduit 200 for the fluid to be filtered is realised in the cover 240 (see figures 3 and 8), while the outlet conduit 220 for the filtered fluid and the fitting element 225 (comprising the outlet conduit 205 for the fluid to be filtered and the inlet conduit 215 for the filtered fluid) are both realised in the hollow body 235 (see figure 4).

It is however possible that in other embodiments the arrangement of the various inlet and outlet conduits 200, 205, 215 and 220, as well as the arrangement and realisation of the internal chambers 195 and 210, can be different from what is described above.

The cover 240 can be an integral part of a functional device comprising an assembly of electrical devices able to be placed in the first chamber 195 or the second chamber 210, as well as an assembly of electrical contacts contained in the body of the cover 240 for connecting the electrical devices with an electrical connector 245 located on an external side of the cover 240, which in turn can be connected with an electronic management and control unit able to electrically supply the electrical devices and/or exchange signals therewith.

In particular, the assembly of electrical devices can comprise a level sensor 250 fixed on the internal side of the cover 240 and positioned so as to be contained internally of the second chamber 210, for example in the volume comprised between the inlet conduit 215 for the filtered fluid and the hydrophobic wall 230. The level sensor 250 is able to generate and transmit to the outside an electrical signal indicating the level of the water which, as it separates from the filtered fluid that crosses the hydrophobic wall 230, accumulates by gravity on the bottom of the second chamber 210.

Alternatively or additionally, the assembly of the electrical devices can comprise a heater (not illustrated) fixed on the internal side of the cover 240 and positioned so as to be contained internally of the first chamber 195, which can be electrically powered from the outside so as to heat the fluid to be filtered directly at the filter 105, for example so as to dissolve the paraffins which can form at low temperatures.

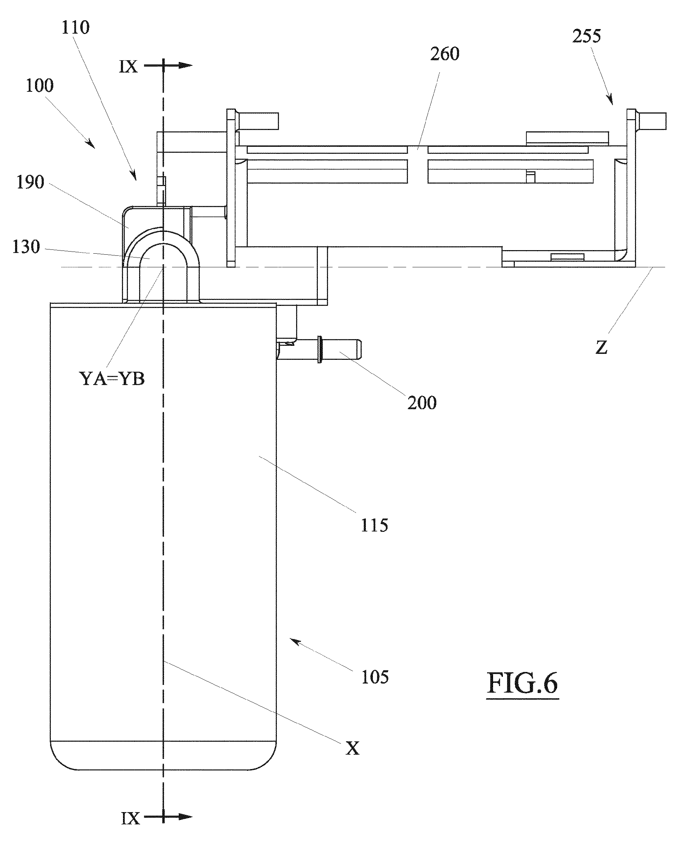

The external casing 190 of the connector device 110 further comprises a support base 255 able to be fixed to the vehicle on which the engine is installed. This support base 255 can be made in a single body with the hollow body 235 and be positioned on the opposite side with respect to the cover 240. The support base 255 can further comprise a portion conformed as a cylindrical cap 260 located by a flank of the fitting element 225 (see figure 6), which develops according to a longitudinal axis Z which is perpendicular and substantially coplanar to the longitudinal axis YB of the fitting element 225, and exhibits an internal diameter that is substantially equal to the external diameter of the casing 115 of the filter 105 (see figure 9).

In use, the support base 255 can be fixed below the chassis of the vehicle, so that the longitudinal axis YB of the fitting element 225 and the longitudinal axis Z of the cylindrical cap 260 are both horizontally orientated, i.e. parallel to the rest plane of the vehicle to the ground, with the cavity of the cylindrical cap 260 facing downwards.

The inlet conduit 200 for the fluid to be filtered and the outlet conduit 220 of the filtered fluid are hydraulically connected to the line or the circuit in which the fluid to be filtered flows. For example, the inlet conduit 200 can be connected so as to receive diesel fuel to be filtered from a pump, while the outlet conduit 220 can be connected so as to send the filtered diesel fuel internally of an injection system of the engine.

The filter 105 is mechanically and hydraulically connected to the connector device 110 through the coupling with the respective fitting elements 130 and 225, i.e. making the fitting element 225 of the connector device 110 insert coaxially in the internal cavity 135 of the fitting element 130 of the filter 105, up to when the annular abutment 226 abuts the edge of the open end of the cavity 135 (see figure 9).

From a hydraulic point of view, this coupling leads to the second portion (narrower) of the fitting element 225 inserting snugly, with an interposing of a seal ring, internally of the second portion (narrower) of the cavity 135, hydraulically connecting the outlet conduit 125 of the filter 105 with the inlet conduit 215 of the connector device 110. At the same time, the coupling leads to the first portion (wider) of the fitting element 225 inserting snugly, with an interposing of a further seal ring, internally of the first portion (wider) of the cavity 135, hydraulically connecting the inlet conduit 120 of the filter 105 with the outlet conduit 205 of the connector device 110.

In this way, the fluid coming from the inlet conduit 200 of the connector device 110 is forced to flow in succession into the first chamber 195 of the connector device 110, into the first chamber 145 of the filter 105, into the second chamber of the filter 150 and lastly into the second chamber 210 of the connector device 110, before reaching the outlet conduit 220. Along this pathway, the fluid is therefore forced to cross, in series, the filter wall 155 which retains the solid or semisolid impurities, the coalescent wall 185 which concentrates the water particles, and lastly the hydrophobic wall 230 which separates the water from the filtered fluid, which accumulates on the bottom of the second chamber 210 of the connector device 110 (in the example at the cover 240), from where it can be periodically discharged each time that the level sensor 250 detects that a predetermined threshold layer has been exceeded.

In this regard, the external casing 190 of the connector device 210 can also comprise an auxiliary discharge opening which, controlled by a mobile obturator element (for example, an obturator body of an automatic or manual valve, a removable cap or a screw) enables the draining of the water accumulated in the second chamber 210.

In this configuration, the fluid to be filtered can cross the filter wall 155 radially from outside towards inside. It is however possible that in other embodiments, the connector device 110 can be configured such that annular gap of the fitting element 225 defines the inlet of the filtered fluid and the central conduit of the fitting element 225 defines the outlet of the fluid to be filtered. In this way, the fluid to be filtered would cross the filter wall 155 radially from inside towards outside.

From a mechanical point of view, the reciprocal coupling of the fitting elements 130 and 225 realises a rotational joint which, as well as connecting the filter 105 to the connector device 110, enables the filter 105 to rotate with respect to the connector device 110 according to a rotation axis which coincides with the longitudinal axis YB of the fitting element 225, which coincides in turn with the axis YA of the cavity 135 of the fitting element 130. In particular, the filter 105 can rotate with respect to the connector device 110 from a working position illustrated in figures from 1 to 3, and a service position illustrated in figures from 6 to 8.

In the working position, the external casing 115 of the filter 105 is housed in the cavity of the cylindrical cap 260 of the connector device 110, with the respective longitudinal axes X and Z which are substantially mutually coinciding, so that the filter group 100 occupies, in its entirety, a space contained below the vehicle.

As the longitudinal axis Z of the cylindrical cap 260 is horizontally orientated, in this working positon the filter 105 tends to rotate spontaneously about the axis YB of the fitting element 225 by effect of gravity. To avoid this, the filter 105 can be blocked in the working positon by a profiled bracket 275 which envelops the portion of the external casing 115 left uncovered by the cylindrical cap 260 and the ends of which are anchored to the cylindrical cap 260.

The profiled bracket 275 can naturally be anchored to the cylindrical cap 260, removably or at least openably, with the aim of enabling rotation of the filter 105 towards the service position when necessary.

In the service position, the longitudinal axis X of the filter 105 is inclined with respect to the longitudinal axis Z of the cylindrical cap 260, for example perpendicular thereto. In particular, as the longitudinal axis Z of the cylindrical cap 260 is horizontally orientated, in this service position the filter 105 can be vertically (or nearly vertically) orientated. In any case, the external casing 115 of the filter 105 in the service position is deconstrained from the cylindrical cap 260, enabling an operative to separate and re-couple the filter 105 to the connector device 110.

These operations can be carried out for example for replacing the filter 105 when the filter wall 155 thereof is completely blocked. In this regard it is observed that as the level sensor 250 and the heater, if present, are associated to the connector device 110, the filter 105 is a quite simple and economical component that might be entirely replaced (including its external casing 115). It is however possible that in other embodiments the external casing 115 of the filter 105 might be openable to enable a replacement of only the filter cartridge 140 located internally.

In this context, the filter group 100 can also comprise a constraining system able to prevent axial de-insertion/insertion of the fitting 130 of the filter 105 with respect to the fitting element 225 of the connector device 110 when the filter 105 is not in the service position.

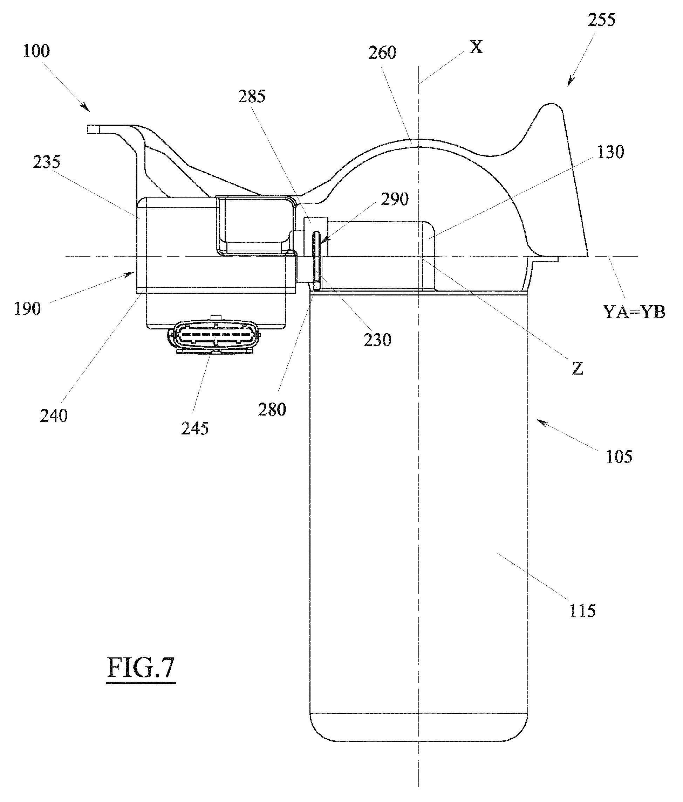

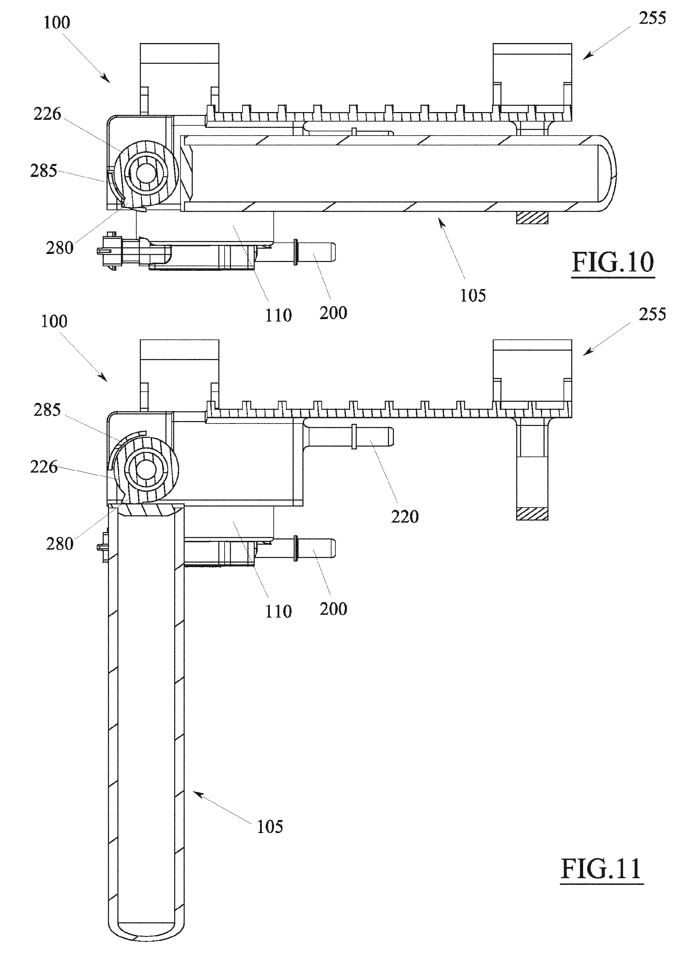

As illustrated in figures 10 and 11, the constraining system comprises a tooth 280 of the fitting element 225, which projects radially from the annular abutment 226, and a cylindrical apron 285 of the fitting element 130, which projects coaxially beyond the edge of the open end of the cavity 135. This cylindrical apron 285 exhibits an internal diameter that is substantially equal to the external diameter of the annular abutment 226, develops for a limited arc about the mouth of the cavity 135, and is provided with a slot 290 that develops circumferentially for a limited portion of the arc starting from a lateral edge (see figure 7).

When the fitting element 225 is completely inserted in the fitting element 130, the cylindrical apron 285 surmounts the annular abutment 226, bringing the slot 290 to be circumferentially aligned with the tooth 280. If however the filter 105 is in the service position (as in figure 7), the tooth 280 is angularly offset with respect to the cylindrical apron 285, so that it is de-constrained from the slot 290, enabling the de-insertion, as well as a successive re-insertion of the fitting element 130 on the fitting element 225. Instead, by rotating the filter 105 towards the working position, the cylindrical apron 285 rotates about the annular abutment 226 and with it the slot 290, which nears the tooth 280. On reaching the working position (as in figure 3), the tooth 280 is thus inserted in the slot 290, preventing any axial displacement of the fitting element 130 with respect to the fitting element 225.

In conclusion it is observed that although in the preceding description the fitting element 130 defines a cavity 135 able to house the fitting element 225 which is conformed as a sleeve, it is possible, in other embodiments, for the two fitting elements to be inverted, i.e. the fitting element 225 is able to define the cavity and the fitting element 130 is able to define the sleeve which inserts in the cavity.

Further, although in the preceding description the support base 255 is configured so that the filter 115 in the working position is orientated horizontally, it is possible for it to be configured so that the filter 115 in the working position is orientated vertically or in any other intermediate orientation. For this purpose, the support base 255 might be modified simply by varying the orientation of the cylindrical cap 260 with respect to the portion of the external casing 190 in which the first and the second chamber 195 and 210 are defined, leaving the position of the cover 240 substantially unchanged (and therefore substantially horizontal).

Obviously a technical expert in the sector might make numerous modifications of a technical-applicational nature to what is described in the foregoing, without forsaking the scope of the invention as claimed in the following.

## Claims

1. A connector device (110) for a filter (105), wherein the connector device comprises:
- a first internal chamber (195) able to place an inlet (200) for the fluid to be filtered in communication with an outlet (205) for the fluid to be filtered,
- a second internal chamber (210) hydraulically separated from the first internal chamber (195) and able to place an inlet (215) for the filtered fluid in communication with an outlet (220) for the filtered fluid , and
- a fitting element (225) having a longitudinal axis (YB) and able to couple with a fitting element (130) of a casing (115) of the filter (105) for realising therewith a rotational joint defining an axis of reciprocal rotation coinciding with the longitudinal axis (YB),
wherein the outlet (205) of the fluid to be filtered and the inlet (215) of the filtered fluid are both defined internally of the fitting element (225).

2. The connector device (110) of claim 1, wherein the second chamber (210) can be internally subdivided into two volumes separated by a hydrophobic wall (230) able to be crossed by the fluid which flows from the inlet (215) of the filtered fluid to the outlet (220) of the filtered fluid.

3. The connector device (110) of any one of the preceding claims, wherein the fitting element (225) of the connector device (110) is defined by a cylindrical sleeve which comprises a central conduit and an annular gap separated from the central conduit and developing coaxially about the central conduit.

4. The connector device (110) of claim 3, wherein the annular gap of the cylindrical sleeve defines the outlet (205) of the fluid to be filtered and the central conduit defines the inlet (215) of the filtered fluid.

5. The connector device (110) of any one of the preceding claims, wherein the first and the second chamber (195, 210) are delimited by an internally hollow body (335) and by a cover (340) able to close the hollow body (335).

6. The connector device (110) of claim 5, wherein the inlet (200) for the filtered fluid is provided in the cover (240).

7. The connector device (110) of claim 5 or 6, wherein the outlet (220) for filtered fluid is provided in the hollow body (235).

8. The connector device (110) of any one of claims from 5 to 7, wherein the fitting element (225) of the connector device (110) is provided in the hollow body (235).

9. The connector device (110) of any one of claims from 5 to 8, wherein the cover (240) bears an electrical device internally of the first and/or the second chamber.

10. The connector device (110) of claim 9, wherein the electrical device comprises a level sensor (250) located internally of the second chamber (210).

11. The connector device (110) of claim 9 or 10, wherein the electrical device comprises a heater located internally of the first chamber (195).

12. The connector device (110) of any one of claims from 9 to 11, wherein the cover (240) is provided with an electrical connector (245) located externally of the first and second chamber (195, 210) and connected to the electrical device.

13. The connector device (110) of any one of the preceding claims, comprising a support base (255) able to be fixed to a chassis of a vehicle.

14. The connector device (110) of claim 13, wherein the support base (255) comprises a cylindrical cap (260) having an axis (Z) perpendicular to the longitudinal axis (YB) of the fitting element (225) and able to at least partly house the casing (115) of the filter (105).

15. A filter (105) comprising:
- an external casing (115) provided with an inlet (120) for a fluid to be filtered and an outlet (125) for the filtered fluid,
- a filter wall (155) able to subdivide the internal volume of the casing into a first chamber (145) communicating with the inlet and a second chamber (150) communicating with the outlet,
- a fitting element (130) provided in the casing (115) of the filter and able to couple with the fitting element (225) of a connector device (110) as in any one of the preceding claims.
wherein the inlet (120) of the fluid to be filtered and the outlet (125) of the filtered fluid of the filter are both defined internally of the fitting element (130).

16. The filter (105) of claim 15, wherein the fitting element (130) of the filter comprises a cavity (135) having an axialsymmetric shape internally of which the inlet (120) of the fluid to be filtered and the outlet (125) of the filtered fluid open.

17. The filter (105) of claim 15 or 16, wherein the external casing (115) has an elongate shape according to a predefined longitudinal axis (X), and
wherein the fitting element (130) has a longitudinal axis (YA) that is inclined with respect to the longitudinal axis (X) of the external casing (115).

18. A filter group (100) comprising a connector device (110) and a filter (105), the connector comprising:
- a first internal chamber (195) able to place an inlet (200) for the fluid to be filtered in communication with an outlet (205) for the fluid to be filtered,
- a second internal chamber (210) hydraulically separated from the first internal chamber (195) and able to place an inlet (215) for the filtered fluid in communication with an outlet (220) for the fluid to be filtered, and
- a fitting element (225) having a longitudinal axis (YA),
wherein the outlet (205) of the fluid to be filtered and the inlet (215) of the filtered fluid are both defined internally of the fitting element (225),
the filter (105) comprising:
- an external chamber (115) provided with an inlet (120) for a fluid to be filtered and an outlet (125) for the filtered fluid,
- a filter wall (155) able to subdivide the internal volume of the casing into a first chamber (145) communicating with the inlet (120) and a second chamber (150) communicating with the outlet (125),
- a fitting element (130) provided in the casing (115) of the filter,
wherein the inlet (120) of the fluid to be filtered and the outlet (125) of the filtered fluid of the filter are both defined internally of the fitting element (130),
the fitting element (225) of the connector device (110) and the fitting element (130) of the filter (105) being reciprocally coupled, realising a rotational joint defining an axis of reciprocal rotation coinciding with the longitudinal axis (YB) of the fitting element (225) of the connector device (110), and placing the outlet (205) for the fluid to be filtered of the connector device (110) in hydraulic communication with the inlet (120) of the fluid to be filtered of the filter (105) and the inlet (215) of the filtered fluid of the connector device (110) in hydraulic communication with the outlet (125) of the filtered fluid of the filter (105).

19. The group (100) of claim 18, comprising constraining means (280, 290) able to prevent axial de-inserting of the fitting element (225) of the connector element (110) with respect to the fitting element (130) of the filter (105), when the filter (105) is in a predetermined work position with respect to the connector device (110).

20. The group (100) of claim 18 or 19, wherein the external casing (115) of the filter (105) has an elongate shape according to a predetermined longitudinal axis (X), and wherein the longitudinal axis (YB) of the fitting element (225) of the connector device (110) is inclined with respect to the longitudinal axis (X) of the external casing (115) of the filter (105).
